# EUROPEAN PATENT SPECIFICATION

(11) **EP 2 469 508 B1**
(45) Date of publication and mention of the grant of the patent: **13.06.2018**
(21) Application number: 10809878.1
(22) Date of filing: 10.08.2010
(51) Int. Cl.: G10K 11/16, B60R 13/08

(54) **SOUND-ABSORBING BODY**
SCHALLDÄMPFENDER KÖRPER
CORPS ABSORBANT LE SON

(30) Priority: 19.08.2009 JP 2009189931
(43) Date of publication of application: 27.06.2012
(73) Proprietor: Nishikawa, Yukihiro, Yamatotakada-shi, Nara 635-0093 (JP); Nishikawa, Yoshiko, Yamatotakada-shi, Nara 635-0093 (JP)
(72) Inventor: Nishikawa, Yukihiro, Yamatotakada-shi, Nara 635-0093 (JP); Nishikawa, Yoshiko, Yamatotakada-shi, Nara 635-0093 (JP)
(74) Representative: Isarpatent
(86) International application number: PCT/JP2010/063525
(87) International publication number: WO 2011/021533

(56) References cited:
- EP-A2- 1 024 054
- FR-A1- 2 698 151
- JP-A- 8 087 278
- JP-A- 2004 025 918
- JP-A- 2006 030 397
- US-A- 4 477 505
- US-A- 5 841 081
- US-A1- 2005 133 299
- US-B1- 6 613 424
- US-B2- 7 182 172

## Description

### Field of Technology

The present invention relates to a sound absorbing body wherein porous materials are layered.

### Technical Background

Conventionally, sound absorbing bodies have been used to adjust the reverberation within rooms such as for home audio and car audio, and the reverberation within speaker enclosures.

There are basically two methods by which sound absorbing bodies absorb sound, a method that uses the viscous resistance of air and a method that uses attenuation within a material.

As one sound absorbing method that uses the viscous resistance of air, there is a method that uses a porous material, such as soft polyurethane foam, where sound is absorbed within the minute airspace through a portion of the vibrational energy being converted into thermal energy, when a sound wave enters into the porous material, due to the viscous resistance of the air, and due to friction with the surrounding.

As a method that uses the other, that is, internal attenuation, there is a method that uses a membrane or a plate, where sound is absorbed through attenuation within the material through the acoustic energy causing the membrane or plate to vibrate.

However, in these sound absorbing methods, the absorption is not necessarily uniform for sound waves across the audible frequency band, where the porous material is superior in terms of the sound absorption characteristics in the high-frequency range and vibrating the membrane or plate exhibits a peak in the sound absorption characteristics at the resonant frequency thereof.

Moreover, with the porous material it is known that the sound absorption characteristics in the low-frequency band can be improved through a method of increasing the thickness, where effective sound absorption characteristics are present if the thickness is at least 1/4 the wavelength of the sound wave, but at a frequency of 100 Hz the thickness would be about 85 cm, and thus the locations wherein sound absorbing bodies with such thicknesses can be installed are inherently limited.

In order to solve such conventional problems, an overall improvement in the sound absorption characteristics has been achieved in the middle and low frequency band with a practical thickness through the formation of a film on the porous material in, for example, Japanese Unexamined Patent Application Publication 2007-34254.

However, the conventional sound absorbing body does not take into consideration acoustic reverberation in uses such as home audio and car audio, and usually sound absorption characteristics that are biased towards the high-frequency band or the low-frequency band, or towards a specific frequency, are seen.

When these sound absorbing bodies, for example, a sound absorbing body having sound absorption characteristics that are biased towards the high-frequency band, are used, the result will be the audio sounding muddy, and when a sound absorbing body having characteristics that are biased towards the low-frequency band are used, the result will be that the sound lacks richness, and sounds barren.

While various combinations of these methods are used in order to solve these problems, determining the optimal combination and installation location requires a high level of knowledge and installation skill, and thus there has been no choice but to rely on an expert in acoustical design.

Moreover, when used in combination, the respective sound absorbing bodies have been arrayed together for use, but in some cases there have been problems with variability in the acoustics depending on the listening point, and cases wherein installation has not been possible due to space problems.

Moreover, for household use there is the need for extreme thinness, given the space problem, for ease in cutting and processing from the perspective of these in installation, simplicity in disposal after cutting, ease in mounting to wall surfaces, and the like, and further, when installed in a location that is likely to be seen, such as within a room, there is also the need for decoration.

### Prior Art Documents

### Patent Documents

Patent Document 1: Japanese Unexamined Patent Application Publication 2007-34254
US-B-7182172 discloses a sound absorbing body for audio comprising a plurality of porous materials provided with air pores therein; a structured body of three or more layers, wherein layers of porous materials are bonded by an adhesive layer having a preset thickness, the adhesive layer being adapted to perform sound absorption through membrane vibration, wherein one side of the structure body is provided on a first side, and the other side of the structured body has a corrugated shape wherein one of the layers of porous materials and air layers are disposed alternatively such that a shape of elements of the layer of porous material increase in volume towards the first side. EP-A-1024054 discloses a vehicle inner ceiling comprising a decorative inner layer which is air porous and forms a sound absorbing layer together with corrugations forms.
US-A-5841081 discloses a method of attenuating sound by using acoustical insulation which comprises heat activatable staple fibers being bonded to themselves and to the micro fibers.

### Disclosure of the Invention

### Problem Solved by the Present Invention

The present invention is the result of focus on the conventional problem areas set forth above, and the object of the present invention is to provide a sound absorbing body that has sound absorbing characteristics that are desirable for the intended use, that is, in suppressing reverberation, within a room, of the sound waves outputted from a speaker or suppressing reverberation within a speaker enclosure, and in maintaining a high sound absorption rate in the mid-frequency band, with flat characteristics, and, in order to be used with ease in a typical home, has a simple structure, can be installed easily, and can be decorated.

### Means for Solving the Problem

The sound absorbing body for audio having a sound source side according to the present invention comprises a plurality of porous materials provided with air pores within; a structured body of three or more layers wherein at least two layers of the porous materials are bonded by an adhesive layer having a preset thickness, the adhesive layer being adapted to perform sound absorbing through membrane vibration; wherein one side of the structured body is provided on the sound source side, and the other side of the structured body has a corrugated shape; characterized in that the corrugated shape is formed by a plurality of individual porous materials and air layers disposed alternatingly such that each of these individual porous materials increases in volume towards the sound source side and is bonded by the adhesive layer.

The present invention, given the configuration set forth above, is well-suited for use for home audio, car audio, and the like because of defect-free, essentially uniform sound-absorption effects in the mid-frequency range, which is the key portion in music, when compared to that which is conventional, given the distinctive features of this structure.

Moreover, in the present invention, preferably a water-repellent treatment is performed on the porous materials, where water is shed through a water shedding path that is produced by the shape of the sound absorbing body in the present invention. Moreover, if the water-repellent treatment is performed so far as to reach into the interior of the porous materials, then there is no limitation on the location wherein it can be cut, given the water repulsion at any place within the sound absorbing body. Because of this, when used in car audio, or the like, it can be formed into a variety of shapes and sizes, depending on the model of car, and will be well-suited for use in cases wherein the sound absorbing body is installed within a door interior wherein rain and water may incur.

Additionally, in the present invention, preferably the porous material is noncombustible, making it suitable for use in situations where non-combustibility is required as well.

Moreover, in the present invention, preferably the porous material is a soft polyurethane foam for which the sound absorption rate has been increased through a hot compression treatment of Japanese Patent Application 2009-143759, which is a previous application by the present inventor.

Additionally, in the present invention, preferably the porous material uses a soft polyurethane foam wherein the hot compression treatment has been performed using a die wherein a decoration has been made to the surface of the die for performing the hot compression molding according to Japanese Patent Application 2009-143759, which is a previous application by the present inventor, to apply decorations, to make it well-suited for use even when there are many opportunities to be seen directly, such as within a room.

Moreover, in the present invention, preferably the porous material uses a soft polyurethane foam to which a flocking process has been performed, to make it well-suited for use even when there are many opportunities to be seen directly, such as within a room.

Moreover, in the present invention preferably the structural body is wrapped in a fabric, to make it well-suited for use even when there are many opportunities to be seen directly, such as within a room.

### Effects of the Invention

In contrast to the sound absorption characteristics that are biased to a specific frequency band, with the structure of a porous material and a film adhered to the side on which the sound waves are incident, in the present invention the acoustic characteristics are improved and flattened through the sound absorbing body for audio having a sound source side set forth in Claim 1 that comprises a plurality of porous materials provided with air pores within; and a structured body of three or more layers wherein at least two layers of the porous materials are bonded by an adhesive layer having a preset thickness, the adhesive layer being adapted to perform sound absorption through membrane vibration; wherein one side of the structured body is provided on the sound source side, and the other side of the structured body has a corrugated shape; characterized in that the corrugated shape is formed by a plurality of individual porous materials and air layers disposed alternatingly such that each of these individual porous materials increases in volume towards the sound source side and is bonded by the adhesive layer.

Moreover, by having the porous material on the partitioning wall side have a peak-and-valley shape makes it possible to control the sound absorption characteristics, without limiting the material, through adjusting the airspace/porous material ratio and the shape thereof.

Moreover, because the structure is of porous material and the adhesive layer alone, installation is easy, and if a water-repellent porous material is used, the corrugated shape of the porous material layer on the partitioning wall side makes the sound absorbing body into a water-resistant sound absorbing body that also has a water-shedding function.

### Forms for Embodying the Present Invention

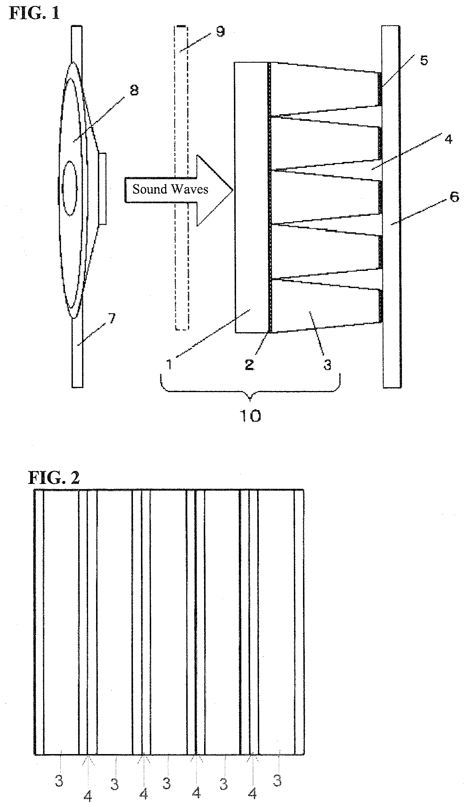

FIG. 1 illustrates the structure of an example embodiment of a sound absorbing body for audio having a sound source side according to the present invention. FIG. 1 is a schematic plan view diagram wherein an automobile door interior is viewed from above, and FIG. 2 is a schematic back view diagram of the product in the present invention.

FIG. 1 - 1 and FIG. 1 - 3 are porous materials having pores in the interior thereof, where, in the present embodiment, each is made from a soft polyurethane foam 1 and 3. FIG. 1 - 2 is an adhesive layer for bonding these together, and, in the present embodiment, is a double-sided adhesive tape 2 that uses a non-woven fabric as the base material thereof.

1 through 3 in FIG. 1 are the structured body in the present invention. Note that in the below, when indicating the layered relationship, the porous material 1 shall be referred to as the first layer, the adhesive layer 2 shall be referred to as the second layer, and the porous material 3 shall be referred to as the third layer.

### Examples of Embodiments

Specific examples of embodiments of the present invention will be set forth below.

While an exemplary embodiment in car audio will be set forth below as a specific use for a sound absorbing body for audio having a sound source side according to the present invention, the present invention is not limited to the embodiment set forth below.

In car audio, reduction of reverberation is achieved through the provision of a sound absorbing body within a speaker enclosure that is the door (partitioning walls 6 and 7) wherein the speaker is embedded.

Additionally, the space within the door is limited, where usually, when the window glass is down between the partitioning wall 6 and the partitioning wall 7, the spacing from the partitioning wall 6 is no more than 80 mm, and, in order to avoid interferences, the thickness of the sound absorbing body in the present embodiment is between 10 and 70 mm, and, preferably, between 30 and 60 mm.

Moreover, because rain water incurs into the interior of the door, water resistance is required, and thus the sound absorbing body must be a water repelling-type water resistant sound absorbing body.

First, soft polyurethane foams 3 cut into 300 mm long rectangular strips of a trapezoidal shape with a top base of 10 mm, a bottom base of 16 mm, and a height of 30 mm, and a soft polyurethane foam 1 with a length of 300 mm, a width of 300 mm, and a thickness of 10 mm, are submerged in a liquid solution of a water-repellent agent, and then dried.

After thorough drying, a double-sided adhesive tape 2 is applied over the entirety of the back face of the soft polyurethane foam 1, and the soft polyurethane foams 3 are affixed side-to-side, without gaps, to the double-sided adhesive tape 2, with the bottom base 16-mm side being affixed, to produce a structured body for audio having a sound source side according to the present invention with a length of 300 mm, a width of 300 mm, and a thickness of 40 mm.

Moreover, similarly, double-sided adhesive tapes 5 with widths of 10 mm are affixed to the 10 mm portions of the soft polyurethane foams 3 on the partitioning wall side of the sound absorbing body for audio having a sound source side according to the present invention. This is in order to affix and install the sound absorbing body for audio having a sound source side according to the present invention onto the partitioning wall 6, that is, onto the inside of the outer panel of the door.

Doing so reduces the leakage of reverberation into the passenger compartment by attenuating the reverberation within the door, through the effect of the sound absorbing body of the present invention on the sound waves outputted from the back face of the speaker 8 that is the sound source that is installed on the partitioning wall 7 that is the interior panel of the door.

Next the product of the present invention was installed in the door of an actual automobile and sent once through an automatic car wash in a state wherein the window was closed, and the increases in mass of the sound absorbing bodies for audio having a sound source side according to the present invention due to moisture incursion were compared for the water-resistant moisture absorbing body for audio having a sound source side according to the present embodiment and a moisture absorbing body of the same shape to which the water-repellent treatment was not performed.

In contrast to the increase in mass of the sound absorbing body for audio having a sound source side according to the present embodiment, to which the water-repellent treatment had been performed, being 0.2 g, the figure was 62.1 g for the un-treated case.

From these results, the sound absorbing body for audio having a sound source side according to the present embodiment can be considered to be exhibiting fully the effects of the water-repellent treatment, enabling use even as a sound absorbing body requiring water resistance, such as for car audio.

Moreover, while with the conventional water-repellent sound absorbing body there is no place for the water to go after being repelled, where it can be anticipated to pool on the top portion of the sound absorbing body, in the sound absorbing body for audio having a sound source side according to the present invention the airspace in the third layer operates effectively as a water shedding path for the water that is repelled.

Moreover, while conceivably water may incur into the interior of the porous material due to falling rain, and the like, over an extended period of time, even if water were to incur into the interior of the porous material, the distance between the deepest portion of the porous material to the surface thereof is uniformly short, regardless of the location, and thus one can anticipate also effects such as a greatly reduced drying time.

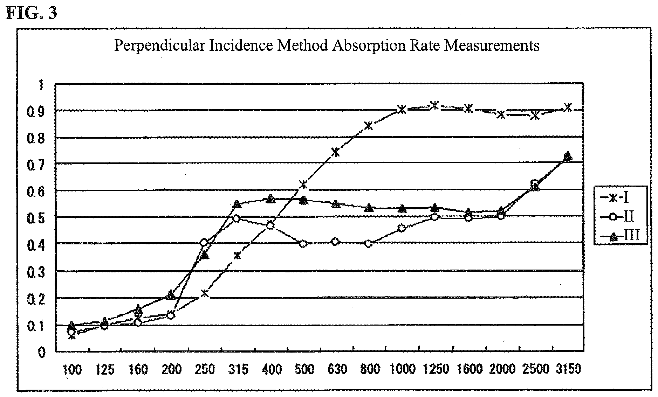

The measurement data for the sound absorption rate using the perpendicular incidence method is shown next in FIG. 3. I is for soft polyurethane foam alone, III is for the sound absorbing body for audio having a sound source side according to the present invention having a corrugated shape on the partitioning wall side, and II is for a sound absorbing body having the same layered structure as in the sound absorbing body of the present invention, but not having the corrugated shape on the partitioning wall side. Note that the thickness for each of the sound absorbing bodies is 40 mm. The vertical axis of the graph shows the sound absorption rate, and the horizontal axis shows the frequency (Hz).

That which is clear from these data is that the porous material that is a single material (I in the graph), which has the sound absorbing property that rises on the right is caused to be essentially flat in the mid-frequency range through the use of the layered structure that is the same as in the sound absorbing body for audio having a sound source side according to the present invention (II in the graph), and that the use of the shape of the sound absorbing body for audio having a sound source side according to the present invention (III in the graph) further improves the flatness of the sound absorption rates in the mid-frequency range.

Note that while the reason for the improved flatness of the sound absorption rates in the mid-frequency range is not completely clear at this time, the following observations can be made.

The reason is thought to be that, with the first layer (the porous material 1), the second layer (the adhesive layer 2), and the third layer (the porous material 3), in the order in which the sound waves outputted from the speaker are incident in the sound absorbing body for audio having a sound source side according to the present invention, first the sound in the mid-frequency through a high-frequency band is absorbed in the first layer, following which sound absorption through membrane vibration is performed on the mid-frequency through low-frequency band component that has passed through the first layer, using the attenuation within the membrane of the second layer, and, in the third layer, the alternating arrangement of the porous material and the air layers, which is the most critical point in the present invention, causes the physical strength of the third layer to be reduced so that, when the first layer and second layer, which are layered together, is treated as a compound monolithic membrane, this third layer fulfills the role of a spring that provides gentle support thereto, and, in addition, by the area with which is bonded to the partitioning wall being lines or being points, the sound absorbing body itself, in the present invention, can be vibrated to further increase the sound absorption ratio in the mid-frequency band.

Note that while in the present embodiment the porous materials 1 and 3 used soft polyurethane foam, they may, of course, be other porous materials instead. Moreover, the porous materials 1 and 3 may either be made of identical materials or different materials. Moreover, preferably the porous material, with a thickness of 30 mm, has a value of at least 0.2 for the perpendicular incidence-method sound absorption rate NRC (noise reduction coefficient, a value wherein the calculated mean of sound absorption rates at the four frequencies of 250 Hz, 500 Hz, 1000 Hz, and 2000 Hz is rounded to 0 or 5 in the second digit after the decimal).

Additionally, while a double-sided adhesive tape that used a non-woven fabric as the base material was used as the adhesive layer 2 in the present embodiment, instead a double-sided adhesive tape that uses a film as a base material, or a double-sided adhesive tape that has no base material, may be used instead. Moreover, for a double-sided adhesive tape that has a base material, the three layers comprising the adhesive agent layer, the base material, and the adhesive agent layer may be considered to be a single layer. Moreover, while the structure may be one wherein there is only the adhesive agent for bonding the porous materials, preferably this adhesive layer has a breathability of no more than 50 cc/cm²/sec, where the breathability is measured based on JIS L-1096.

Note that preferably the soft polyurethane foams 1 and 3 in the present embodiment use hot compression-molded soft polyurethane foams wherein the sound absorption rate has been improved, according to Japanese Patent Application 2009-143759, which is a previous application by the present inventor.

Note that preferably the soft polyurethane foam 1 in the present embodiment uses a hot compression-molded soft polyurethane foam, to which a decoration process has been performed, wherein the sound absorption rate has been improved, according to Japanese Patent Application 2009-143759, which is a previous application by the present inventor.

Note that the soft polyurethane foams 1 and 2 in the present embodiment preferably use soft polyurethane foams to which a flocking process has been performed.

Note that preferably the soft polyurethane foams 1 and 3 in the present embodiment use a non-combustible porous material.

Note that if installed in a location that can be seen, such as within a room, preferably the structured body in the present invention is wrapped in a fabric.

Note that the measurement of the sound absorption rate used a measurement method according to the JIS Standard, JIS A 1405-2, "Sound Absorption Rate and Impedance Measurements in Acoustic Tubes - Part 2: Transfer Function Method."

Note that while in the present embodiment use within a speaker enclosure in car audio was envisioned when setting the thickness and the dimensions, there is no limitation thereto in other cases, such as use within an automobile cabin, use in an enclosure for home audio, used in a room, and the like.

That is, the present invention is not limited to the form of embodiment set forth above, but rather the thicknesses and shapes of the porous materials in the first and third layers, and the thickness and method of adhesion for structuring the second layer, may use that which is appropriate. Moreover, insofar as it is within the scope of the present invention, as defined by the appended claims, there may be any ratio for the air layer and the porous material in the third layer, and the shape thereof may be round, elliptical, undulating, triangular, squamous, hexagonal, or any other shape. Moreover, the ratio and shape may be changed as appropriate to achieve modifications in the sound absorbing characteristics.

### Brief Description of the Drawings

FIG. 1 is a schematic plan view of the sound absorbing body for audio having a sound source side according to an embodiment of the present invention, when viewed from above.
FIG. 2 is a schematic back view diagram of the sound absorbing body for audio having a sound source side according to an embodiment of the invention.
FIG. 3 is a graph illustrating the sound absorbing rates at various frequencies for a sound absorbing body for audio having a sound source side according to an embodiment of the invention.

### Explanation of Reference Signs

- 1, 3: Soft Urethane Foam (Porous Material)
- 2: Double-Sided Adhesive Tape (Adhesive Layer)
- 4: Air Layer
- 5: Double-Sided Adhesive Tape
- 6: Door Outer Panel
- 7: Door Inner Panel
- 8: Speaker
- 9: Window Glass
- 10: Structured Body

## Claims

1. A sound absorbing body for audio having a sound source side, comprising:
a plurality of porous materials (1, 3) provided with air pores within; and
a structured body (10) of three or more layers wherein at least two layers of the porous materials (1, 3) are bonded by an adhesive layer (2) having a preset thickness, the adhesive layer (2) being adapted to perform sound absorption through membrane vibration;
wherein one side of the structured body (10) is provided on the sound source side, and the other side of the structured body (10) has a corrugated shape;
**characterized in that** the corrugated shape is formed by a plurality of individual porous materials (3) and air layers disposed alternatingly such that each of these individual porous materials (3) increases in volume towards the sound source side and is bonded by the adhesive layer (2).

2. The sound absorbing body for audio as set forth in Claim 1, wherein the porous materials (1, 3) have a value of at least 0.2, at a thickness of 30 mm, for the perpendicular incidence-method sound absorption rate noise reduction coefficient, NRC.

3. The sound absorbing body for audio as set forth in Claim 1 or Claim 2, wherein the corrugated shape has an air layer that forms a recessed shape with a width of at least 3 mm and a depth of at least 3 mm.

4. The sound absorbing body for audio as set forth in any one of Claim 1 through Claim 3, further having partitioning walls and a sound source, wherein the structured body is provided with the corrugated face on the side opposite from the sound source in the interior of a space that has the sound source and that is structured by the partitioning walls.

5. The sound absorbing body for audio as set forth in any one of Claim 1 through Claim 4, wherein a water-repellent treatment is performed on the porous materials (1, 3), to cause water to be shed from the air layers of the corrugated shape.

6. The sound absorbing body for audio as set forth in Claim 5, wherein the water-repellent treatment is performed so far as to reach into the interior of the porous materials (1, 3).

7. The sound absorbing body for audio as set forth in any one of Claim 1 through Claim 6, wherein the adhesive layer (2) has a breathability of no more than 50 cc/cm²/sec.

8. The sound absorbing body for audio as set forth in any one of Claim 1 through Claim 7, wherein the porous materials (1, 3) use hot compression molded soft polyurethane foam.

9. The sound absorbing body for audio as set forth in any one of Claim 1 through Claim 7, wherein the porous materials (1, 3) comprise a soft polyurethane foam.

10. A method of providing a sound absorbing body for audio having a sound source side, the method comprising:
providing a plurality of porous materials (1, 3) with air pores within;
bonding at least two layers of the porous materials (1, 3) by an adhesive layer (2) having a preset thickness to produce a structured body (10) of three or more layers, the adhesive layer (2) being adapted to perform sound absorption through membrane vibration; and
providing one side of the structured body (10) on the sound source side, wherein the other side of the structured body (10) has a corrugated shape;
**characterized in that** the corrugated shape is formed by alternatingly disposing a plurality of individual porous materials (3) and air layers such that each of these individual porous materials (3) increases in volume towards the sound source side and is bonded by the adhesive layer (2).

## Patentansprüche

1. Schallabsorbierender Körper für Audio mit einer Schallquellenseite, umfassend:
mehrere poröse Materialien (1, 3), die mit Poren darin bereitgestellt sind, und
einen strukturierten Körper (10) aus drei oder mehr Schichten, wobei mindestens zwei Schichten der porösen Materialien (1, 3) durch eine Klebeschicht (2) gebunden sind, die eine voreingestellte Dicke hat, wobei die Klebeschicht (2) ausgelegt ist, um Schallabsorption durch Membranschwingung durchzuführen,
wobei eine Seite des strukturierten Körpers (10) auf der Schallquellenseite bereitgestellt ist und die andere Seite des strukturierten Körpers (10) eine gewellte Form hat,
**dadurch gekennzeichnet, dass** die gewellte Form durch mehrere einzelne poröse Materialien (3) und Luftschichten gebildet ist, die abwechselnd derart angeordnet sind,
dass jedes dieser einzelnen porösen Materialien (3) bezüglich des Volumens hin zu der Schallquellenseite zunimmt und durch die Klebeschicht (2) gebunden ist,

2. Schallabsorbierender Körper für Audio nach Anspruch 1, wobei die porösen Materialien (1, 3) einen Wert von mindestens 0,2 bei einer Dicke von 30 mm für den Geräuschminderungskoeffizienten, NRC, der Schallabsorptionsrate beim Verfahren mit senkrechtem Einfall haben.

3. Schallabsorbierender Körper nach Anspruch 1 oder 2, wobei die gewellte Form eine Luftschicht hat, die eine vertiefte Form mit einer Breite von mindestens 3 mm und einer Tiefe von mindestens 3 mm bildet.

4. Schallabsorbierender Körper für Audio nach einem der Ansprüche 1 bis 3, der ferner Trennwände und eine Schallquelle hat, wobei der strukturierte Körper mit der gewellten Fläche auf der Seite gegenüber von der Schallquelle in dem Inneren eines Raums bereitgestellt ist, der die Schallquelle hat und der durch die Trennwände strukturiert ist.

5. Schallabsorbierender Körper für Audio nach einem der Ansprüche 1 bis 4, wobei eine wasserabweisende Behandlung auf den porösen Materialien (1, 3) durchgeführt ist, um Wasser zu veranlassen, aus den Luftschichten der gewellten Form zu fließen.

6. Schallabsorbierender Körper für Audio nach Anspruch 5, wobei die wasserabweisende Behandlung so weit durchgeführt ist, dass sie in das Innere der porösen Materialien (1, 3) reicht.

7. Schallabsorbierender Körper für Audio nach einem der Ansprüche 1 bis 6, wobei die Klebeschicht (2) eine Atmungsaktivität von nicht mehr als 50 cm³/cm²/s hat.

8. Schallabsorbierender Körper für Audio nach einem der Ansprüche 1 bis 7, wobei die porösen Materialien (1, 3) heißpressgeformten weichen Polyurethan-Schaum benutzen.

9. Schallabsorbierender Körper für Audio nach einem der Ansprüche 1 bis 7, wobei die porösen Materialien (1, 3) einen weichen Polyurethan-Schaum umfassen.

10. Verfahren zum Bereitstelen eines schallabsorbierenden Körpers für Audio mit einer Schallquellenseite, wobei das Verfahren Folgendes umfasst:
Bereitstellen von mehreren porösen Materialien (1, 3) mit Luftporen darin,
Binden von mindestens zwei Schichten der porösen Materialien (1, 3) durch eine Klebeschicht (2), die eine voreingestellte Dicke hat, um einen strukturierten Körper (10) aus drei oder mehr Schichten herzustellen, wobei die Klebeschicht (2) ausgelegt ist, um Schallabsorption durch Membranschwingung durchzuführen, und
Bereitstellen einer Seite des strukturierten Körpers (10) auf der Schallquellenseite, wobei die andere Seite des strukturierten Körpers (10) eine gewellte Form hat,
**dadurch gekennzeichnet, dass** die gewellte Form durch derart abwechselndes Anordnen von mehreren einzelnen porösen Materialien (3) und Luftschichten gebildet ist,
dass jedes dieser einzelnen porösen Materialien (3) bezüglich des Volumens hin zu der Schallquellenseite zunimmt und durch die Klebeschicht (2) gebunden ist.

## Revendications

1. Corps absorbant acoustique pour chaîne stéréophonique ayant un côté source sonore, comprenant :
une pluralité de matériaux poreux (1, 3) pourvus de pores remplis d'air en leur sein ; et
un corps structuré (10) de trois couches ou plus, dans lequel au moins deux couches des matériaux poreux (1, 3) sont collées par une couche adhésive (2) présentant une épaisseur prédéfinie, la couche adhésive (2) étant conçue pour réaliser une absorption acoustique par vibration de membrane ;
dans lequel un côté du corps structuré (10) est placé du côté de la source sonore, et l'autre côté du corps structuré (10) possède une forme ondulée ;
**caractérisé en ce que** la forme ondulée est constituée d'une pluralité de matériaux poreux individuels (3) et de couches d'air disposés en alternance, de manière que chacun de ces matériaux poreux individuels (3) augmente de volume vers le côté source sonore et soit collé par la couche adhésive (2).

2. Corps absorbant acoustique pour chaîne stéréophonique, selon la revendication 1, dans lequel les matériaux poreux (1, 3) ont une valeur d'au moins 0,2 et une épaisseur de 30 mm, pour le coefficient de réduction du bruit, CRB, de taux d'absorption acoustique selon la méthode de l'incidence perpendiculaire.

3. Corps absorbant acoustique pour chaîne stéréophonique, selon la revendication 1 ou la revendication 2, dans lequel la forme ondulée comporte une couche d'air qui forme une forme évidée d'une largeur d'au moins 3 mm et d'une profondeur d'au moins 3 mm.

4. Corps absorbant acoustique pour chaîne stéréophonique, selon l'une quelconque des revendications 1 à 3, comportant en outre des cloisons et une source sonore, dans lequel le corps structuré est pourvu de la face ondulée du côté opposé à la source sonore à l'intérieur d'un espace qui comporte la source sonore est qui est structuré par les cloisons.

5. Corps absorbant acoustique pour chaîne stéréophonique, selon l'une quelconque des revendications 1 à 4, dans lequel une hydrofugation est réalisée sur les matériaux poreux (1, 3), pour faire que l'eau s'évacue depuis les couches d'air de la forme ondulée.

6. Corps absorbant acoustique pour chaîne stéréophonique, selon la revendication 5, dans lequel l'hydrofugation est réalisée jusqu'à atteindre l'intérieur des matériaux poreux (1, 3).

7. Corps absorbant acoustique pour chaîne stéréophonique, selon l'une quelconque des revendications 1 à 6, dans lequel la couche adhésive (2) possède une respirabilité d'au plus 50 cm³/cm²/s.

8. Corps absorbant acoustique pour chaîne stéréophonique, selon l'une quelconque des revendications 1 à 7, dans lequel les matériaux poreux (1, 3) utilisent de la mousse de polyuréthane souple, moulée par compression à chaud.

9. Corps absorbant acoustique pour chaîne stéréophonique, selon l'une quelconque des revendications 1 à 7, dans lequel les matériaux poreux (1, 3) comprennent une mousse de polyuréthane souple.

10. Procédé pour obtenir un corps absorbant acoustique pour chaîne stéréophonique ayant un côté source sonore, le procédé comprenant les étapes suivantes :
se procurer une pluralité de matériaux poreux (1, 3) présentant des pores remplis d'air en leur sein ;
coller au moins deux couches des matériaux poreux (1, 3) à l'aide d'une couche adhésive (2) présentant une épaisseur prédéfinie pour produire un corps structuré (10) d'au moins trois couches, la couche adhésive (2) étant conçue pour réaliser une absorption acoustique par vibration de membrane ; et
placer un côté du corps structuré (10) du côté de la source sonore, dans lequel l'autre côté du corps structuré (10) possède une forme ondulée ;
**caractérisé en ce que** la forme ondulée est obtenue par disposition alternée d'une pluralité de matériaux poreux individuels (3) et de couches d'air, de manière que chacun de ces matériaux poreux individuels (3) augmente de volume vers le côté source sonore et soit collé par la couche adhésive (2).
